Europäisches Patentamt

European Patent Office

Office européen des brevets

(19)

(11) EP 0 478 768 B1

(12) FASCICULE DE BREVET EUROPEEN

(45) Date de publication et mention
de la délivrance du brevet:
**20.03.1996 Bulletin 1996/12**

(51) Int Cl.6: **C01B 13/32**, C01G 25/02,
B01J 21/06

(21) Numéro de dépôt: **91908978.9**

(22) Date de dépôt: **18.04.1991**

(86) Numéro de dépôt international:
**PCT/FR91/00322**

(87) Numéro de publication internationale:
**WO 91/16265 (31.10.1991 Gazette 1991/25)**

(54) **PROCEDE DE SYNTHESE D'OXYDES METALLIQUES A SURFACE SPECIFIQUE ET A POROSITE ELEVEES, OXYDES OBTENUS, ET UTILISATION DESDITS OXYDES DANS DES CATALYSEURS**

VERFAHREN ZUR HERSTELLUNG VON METALLOXIDEN MIT ERHÖHTER SPEZIFISCHER OBERFLÄCHE UND PORÖSITÄT, HERGESTELLTE OXIDE UND DEREN VERWENDUNG IN KATALYSATOREN

PROCESS FOR THE SYNTHESIS OF HIGH POROSITY, HIGH SPECIFIC SURFACE METALLIC OXIDES, OXIDES OBTAINED AND USE THEREOF IN CATALYSTS

(84) Etats contractants désignés:
**BE DE ES GB IT NL**

(30) Priorité: **20.04.1990 FR 9005049**

(43) Date de publication de la demande:
**08.04.1992 Bulletin 1992/15**

(73) Titulaire: **ELF AQUITAINE**
**F-92400 Courbevoie (FR)**

(72) Inventeurs:
• **DURAND, Bernard**
**F-69330 Meyzieu (FR)**
• **DE MAREUIL, Dominique**
**F-69002 Lyon (FR)**
• **VRINAT, Michel**
**F-69300 Caluire (FR)**
• **DES COURIERES, Thierry**
**F-69007 Lyon (FR)**

(74) Mandataire: **Boillot, Marc**
**ELF AQUITAINE,**
**Division Propriété Industrielle,**
**Tour Elf**
**F-92078 Paris la Défense Cédex 45 (FR)**

(56) Documents cités:
**EP-A- 0 217 613          US-A- 4 293 535**

• **CHEMICAL ABSTRACTS, vol. 81, no. 10, 9 septembre 1974 Columbus, Ohio, USA Yu. S. Sokolovskii et al.: "Finely dispersed group IV metal oxides." page 132; ref. no. 51743 Z**

## Description

Cette invention concerne la synthèse d'oxydes métalliques à surface spécifique et à porosité élevées, thermiquement stables.

Pour l'utilisation comme adsorbant et surtout support de catalyseur, il est important de disposer d'oxydes métalliques à surface spécifique et à porosité élevées et qui conservent leur surface spécifique et leur porosité lors de chauffage prolongé à température élevée. En effet la durée de vie des catalyseurs dépend en partie de leur résistance au chauffage, et la durée de vie des catalyseurs est un facteur déterminant de l'économie des procédés catalytiques. L'utilisation d'un support catalytique stable permet de réduire au minimum les arrêts d'unités pour remplacement du catalyseur usagé.

La synthèse de ces oxydes par calcination des sels métalliques nécessite des températures élevées. Pour certains métaux, comme le zirconium, la calcination de ses sels à température élevée résulte dans la formation d'oxydes dont la surface spécifique ne dépasse pas 2-3m$^2$/g.

D'autres oxydes peuvent être obtenues par calcination, en général des hydroxydes correspondants. Ainsi les alumines sont obtenues par chauffage de différents hydroxydes d'aluminium.

La résistance thermique de ces oxydes et donc la durée de vie des catalyseurs qui les renferme est encore loin d'être satisfaisante.

De nombreux procédés ont été proposés pour l'obtention de supports catalytiques très poreux, dont la porosité résiste aux traitements thermiques prolongés.

Ainsi selon le brevet américain 4731352, les oxydes métalliques, tels que l'alumine, silice, zircone ou oxyde de titane sont associés à un copolymère oléfine-anhydride maléique. Cette association procure une porosité importante et stable. La mise en oeuvre du procédé est cependant longue et coûteuse, et passe par la mise en solution d'un sel métallique et la formation d'un gel.

Selon la demande de brevet français 2540887 un oxyde de zirconium stable est obtenu par coprécipitation d'une solution renfermant un composé du zirconium et un composé d'un métal stabilisant, suivi de séchage et de calcination.

Le brevet russe SU-A-395328 décrit la préparation de zirconium poreux par oxydation aux carbonates alcalins dans un mélange de chlorures alcalins fondus, la température de fusion de ce mélange étant très élevée, et la réaction ayant lieu dans une atmosphère d'Argon ou de gaz carbonique.

Nous avons trouvé maintenant un procédé de synthèse simple, en une seule étape, d'oxydes métalliques à surface spécifique et à porosité élevées. Les températures utilisées dans ce procédé sont beaucoup plus basses que les températures de calcination habituelles, ce qui rend le procédé plus économique. Les oxydes à surface spécifique et à porosité élevées obtenus sont stables à température élevée et permettent une excellente dispersion des phases catalytiquement actives.

Le procédé de synthèse d'oxydes métalliques à surface spécifique supérieure à 135 m$^2$/g et de porosité supérieure à 0,2 cm$^3$/g, selon l'invention consistant à introduire un sel d'au moins un métal dans un milieu sel fondu à maintenir le mélange à la température de réaction le temps nécessaire pour transformer le sel en oxyde et à isoler l'oxyde métallique, se caractérise en ce que le milieu sel fondu est constitué par au moins un sel alcalin à effet oxydant, du groupe constitué par les nitrates et les sulfates alcalins.

Ce procédé permet la synthèse de très nombreux oxydes métalliques. Il est particulièrement utile pour la synthèse d'oxydes des métaux des groupes 3 et 4 de la classification périodique des éléments et plus particulièrement pour la synthèse des oxydes réfractaires, tels que les oxydes de zirconium, d'aluminium, de silicium et de titane.

Le procédé permet également la préparation d'oxydes mixtes ou de dispersion d'oxydes de ces métaux. Les oxydes mixtes préparés selon le procédé de la présente invention présentent une répartition homogène de leurs éléments.

Ainsi il est possible de préparer les supports catalytiques mixtes, renfermant par exemple de la zircone et l'alumine.

Par ailleurs il est connu que la cristallisation de la zircone peut être orientée par l'introduction de métaux bivalents ou trivalents, comme l'yttrium, le magnésium ou le calcium qui ont un effet stabilisant sur une forme cristalline. La forme cristalline de la zircone dépend également de la quantité de métal stabilisant. L'yttrium à faible concentration favorise la formation de zircone quadratique, tandis qu'à concentrations élevées il y a formation de zircone cubique. Le procédé selon l'invention permet une distribution homogène de ces métaux stabilisants d'où une efficacité accrue.

Le sel métallique à transformer en oxyde est un sel quelconque de ce métal. Il s'agit en général d'un oxychlorure, d'un nitrate, sulfate ou halogénure comme le chlorure ou le bromure. Dans le cas du zirconium on utilise de préférence l'oxychlorure de zirconium, $ZrOCl_2$.

Le milieu sel fondu, composé d'au moins un sel alcalin à effet oxydant permet de travailler à des températures basses, nécessaires pour l'obtention d'oxydes à surface spécifique et à porosité élevées. L'utilisation de sels alcalins hydrosolubles facilite également la récupération des oxydes formés.

Parmi les sels alcalins à effet oxydant, on utilise de préférence un mélange de nitrates, à cause de leur point de fusion plus bas. Les nitrates sont réduits en dioxyde d'azote au cours de la réaction.

Il est avantageux d'utiliser un mélange eutectique, tel qu'un mélange $KNO_3$ - $NaNO_3$. Ce mélange fond à 225°C et permet de sélectionner la température réactionnelle dans un domaine très large.

La température influe sur la surface spécifique et la porosité de l'oxyde obtenu.

Une augmentation de la température favorise la formation de larges pores, mais a un effet inverse sur la surface spécifique. L'optimum doit être déterminé en fonction de l'utilisation finale de l'oxyde. En cas d'utilisation comme support de catalyseur, la taille des pores doit être compatible avec la taille des molécules à transformer.

La température de la réaction varie donc en fonction des propriétés recherchées et également en fonction de la nature des réactifs.

En cas de l'utilisation de nitrates alcalins, la température de la réaction varie en général entre 250 et 550°C. Dans le cas de la synthèse de la zircone, la température est en général comprise entre 450 et 550°C.

Nous décrivons plus en détail la mise en oeuvre du procédé de synthèse des oxydes métalliques.

Le ou les sels métalliques à transformer en oxydes sont introduits dans un réacteur. Si ils se présentent sous forme d'hydrates, ils sont d'abord deshydratés. On ajoute à ce milieu le ou les sels alcalins à effet oxydant et l'ensemble est amené à la température de la réaction.

Les sels alcalins sont employés en large excès par rapport au sel métallique à transformer en oxyde. On utilise en général 2 à 3 fois la quantité de sel alcalin par rapport à la stoéchiométrie de la réaction.

La réaction est complète en 0,5 h à 2 heures. Le milieu réactionnel est refroidi et les sels alcalins éliminés par lavage à l'eau. Les oxydes métalliques sont récupérés en général par filtration.

Les rendements en oxydes sont voisins de 100%.

Dans le cas de la synthèse de la zircone, le zirconium est utilisé en général sous forme d'oxychlorure. Les mélanges zircone-alumine sont obtenus à partir d'un sel de zirconium comme l'oxychlorure de zirconium et un sel d'aluminium, comme le chlorure d'aluminium. La zircone est en général stabilisée par un métal bi ou trivalent, comme l'yttrium, le magnésium ou le calcium. L'yttrium est en général utilisé sous forme de chlorure $YCl_3$.

La forme cristalline de la zircone sera fonction de la quantité de métal stabilisant. Sa porosité et sa surface spécifique dépendront de la température de la réaction.

Les oxydes métalliques à surface spécifique et à porosité élevées, obtenus selon l'invention sont utilisés comme adsorbants ou supports catalytiques de catalyseurs de transformation de composés organiques.

En cas de leur utilisation comme support catalytique, les phases actives sont introduites en général par imprégnation par des précurseurs des phases actives. Ces précurseurs sont transformés en phases catalytiquement actives, en général par calcination et sulfuration.

Les catalyseurs dont le support est constitué par des oxydes métalliques préparés selon l'invention présentent une stabilité thermique et une activité catalytique améliorées par rapport aux catalyseurs commerciaux.

Nous avons comparé l'évolution de la surface spécifique des zircones quadratiques et cubiques, obtenues selon l'invention, à celle d'une zircone conventionnelle, telle que décrite dans l'article de P.D.L. MERCERA et coll (Applied Catalysis 57 127-148 (1990)) . Les zircones préparées selon l'invention présentent une stabilité texturale grandement améliorée par rapport à la zircone conventionnelle.

Utilisés comme supports de catalyseurs ces oxydes permettent une répartition très homogène des phases actives, ce qui améliore leurs performances par rapport aux catalyseurs commerciaux.

Les catalyseurs à base de zircone, ou de zircone-alumine, préparés selon l'invention sont d'excellents catalyseurs de réactions d'hydrotraitement de charges hydrocarbonées, comme l'hydrogénation, l'hydrodésazotation et l'hydrodésulfuration. Les phases actives de ces catalyseurs renferment en général du nickel et du molybdène.

Les exemples suivants illustrent l'invention sans toutefois la limiter.

EXEMPLE 1 (Préparation d'une zircone quadratique)

Un oxychlorure de zirconium commercial $ZrOCl_2$, $8H_2O$ (MERCK) est ajouté au chlorure d'yttrium, $YCl_3$, $6H_2O$ (PROLABO) en quantité telle que le rapport molaire $Y_2O_3/ZrO_2$ soit de 0,03. Le mélange est deshydraté par chauffage à 150°C pendant 30 minutes. On introduit un mélange $KNO_3$ - $NaNO_3$ en large excès par rapport aux quantités stoechiométriques (environ un rapport de 2).

Le mélange est chauffé à 485°C et cette température maintenue pendant 1 heure. Après refroidissement du bain et élimination des sels alcalins par lavage prolongé à l'eau, la zircone est récupérée par filtration. Le rendement est voisin de 100%.

La zircone quadratique obtenue se caractérise par une surface spécifique mesurée selon la méthode BET de $135 m^2/g$, un volume poreux à l'azote de 0,29 $cm^3/g$ et un rayon moyen des pores de 3,5nm.

Par la suite, cet échantillon sera dénommé A.

EXEMPLE 2 (Préparation d'une zircone cubique).

On répète l'exemple 1, mais avec un rapport molaire $Y_2O_3/ZrO_2$ de 0,1, et une température de réaction de 520°C. Le rendement est voisin de 100%.

On obtient une zircone cubique qui se caractérise par une surface spécifique mesurée selon la méthode BET de $140m^2/g$, un volume poreux à l'azote de $0,20cm^3/g$ et un rayon moyen des pores de 3 nm.

Par la suite cet échantillon sera dénommé B.

EXEMPLE 3 (Préparation d'une dispersion alumine-zircone)

L'oxychlorure de zirconium et le chlorure d'yttrium sont deshydratés comme précédemment. On ajoute du chlorure d'aluminium anhydre $AlCl_3$ (PROLABO) et un mélange $KNO_3$ - $NaNO_3$. Le rapport molaire $Al_2O_3/ZrO_2 + Y_2O_3$ est égal à 1 et le rapport molaire $Y_2O_3/ZrO_2$ est égal à 0,03. Les nitrates sont utilisés en large excès par rapport aux quantités stoechiométriques (environ un rapport de 2).

Le mélange est maintenu à 450°C pendant 1 heure. La récupération des oxydes formés se déroule de la même façon que dans l'exemple 1. Le rendement est voisin de 100%. La dispersion alumine-zircone obtenue se caractérise par une surface spécifique mesurée selon la méthode BET de $200m^2/g$, un volume poreux à l'azote de $0,26cm^3/g$ et un rayon des pores de 3nm.

EXEMPLE 4 (Préparation de Silice)

Un chlorure de silicium commercial, $SiCl_4$ (MERCK) est ajouté à un mélange $KNO_3$-$NaNO_3$, en quantités telles que les nitrates soient en large excès par rapport aux quantités stoechiométriques (environ un rapport de 2).

Le mélange est maintenu à 450°C pendant 1 heure. La récupération de l'oxyde se déroule de la même façon que dans l'exemple 1. Le rendement est voisin de 100%.

La silice obtenue se caractérise par une surface spécifique mesurée selon la méthode BET de $750m^2/g$ et un volume poreux à l'azote de $0,40cm^3/g$.

EXEMPLE 5 (Préparation d'oxyde de titane)

Un chlorure de titane commercial, $TiCl_4$ (MERCK) est ajouté à un mélange $KNO_3$-$NaNO_3$, en quantités telles que les nitrates soient en large excès par rapport aux quantités stoechiométriques (environ un rapport de 2).

Le mélange est maintenu à 420°C pendant 1 heure. La récupération de l'oxyde formé, se déroule de la même façon que dans l'exemple 1. Le rendement est voisin de 100%.

L'oxyde de titane obtenu se caractérise par une surface spécifique mesurée selon la méthode BET de $150m^2/g$, un volume poreux à l'azote de $0,25cm^3/g$ et un rayon moyen des pores de 3nm.

EXEMPLE 6 (Stabilité)

Les échantillons A et B ont été comparés à une zircone conventionnelle telle que décrite dans l'article de P.D.L. MERCERA et coll. (Appl. Catal, 57 (1990) 127-148).

La modification de la surface spécifique des différents échantillons après calcination à différentes températures a été évaluée en divisant la surface spécifique obtenue à haute température par celle mesurée pour l'échantillon non calciné après récupération.

TABLEAU I

| T°C | 450 | 550 | 650 |
|---|---|---|---|
| A | 0,9 | 0,7 | 0,7 |
| B | 1,0 | 0,9 | 0,9 |
| $ZrO_2$ Convent. | 0,4 | 0,3 | 0,2 |

Les échantillons A et B présentent une stabilité texturale grandement améliorée par rapport à une zircone conventionnelle.

EXEMPLE 7 (Préparation de catalyseurs contenant une phase active NiMo.)

Les catalyseurs sont obtenus par coimprégnation sans excès de solution des solides préparés selon la méthode exposée dans les exemples 1 à 5, avec des solutions d'heptamolybdate d'ammonium et de nitrate de nickel, en quantités telles que la teneur en Mo soit de 2.8 atomes/$nm^2$ et celle de Ni corresponde à un rapport molaire (Ni/Ni+Mo) de 0.3 ou 0.4. Les produits résultants sont ensuite calcinés sous air à 350°C pendant 2 heures.

Les catalyseurs ainsi préparés à partir des solides A et C seront appelés AA et CC.

EXEMPLE 8 (Utilisation en test catalytique sur molécule modèle : hydrogénation du biphényle).

La réaction est réalisée en phase gazeuse dans un microréacteur dynamique sous pression.
Les catalyseurs sont présulfurés en présence d'un mélange $H_2/H_2S(15\%)$, 4 heures à 400°C.
L'hydrogène, gaz-réactif, est saturé en biphényle dans un saturateur-condensateur travaillant à la même pression que le réacteur. Un système de capillaires assure la stabilisation de la pression ainsi que la détente à la pression atmosphérique. L'analyse est réalisée dans un chromatrographe à ionisation de flamme. Les mesures du taux de conversion en biphényle, permettent de calculer les vitesses spécifiques (par gramme) des catalyseurs, $A_s$, en appliquant la relation :

$$A_s = Q_{BP} \times \text{taux de conversion}/m$$

avec $Q_{BP}$ = débit en biphényle et m = masse de catalyseur.
Les conditions opératoires sont les suivantes :

| | |
|---|---|
| $P_{totale} = 23\ 10^5$ Pa | $m_{cata} = 100$ mg |
| $P_{BP} = 5.8\ 10^2$ Pa | $Q_{BP} = 7\ 10^{-8}$ mol/s |
| $P_{H2S} = 3.5\ 10^2$ Pa | $Q_{H2} = 2\ 10^{-4}$ mol/s |

Le tableau suivant donne les activités spécifiques à 530K des catalyseurs AA et CC comparés à l'activité du catalyseur commercial Ni/Mo sur alumine (HR 346 de la Société Procatalyse).

TABLEAU 2

| Catalyseur | $A_s$ (mol/s.g) |
|---|---|
| AA | $14.5\ 10^{-8}$ |
| CC | $13\ 10^{-8}$ |
| HR 346 | $12\ 10^{-8}$ |

EXEMPLE 9 (Utilisation en test catalytique sur molécule modèle: hydrodésazotation (HDN) de la 2,6-diéthylaniline.)

Il a été constaté, au cours de l'hydrotraitement des coupes lourdes ou moyennes des produits de la distillation du brut, une accumulation des alkylanilines dans les effluents. Elle a été attribuée à l'inhibition de l'HDN des alkylanilines formées au cours de la première coupure C-N par les composés polycycliques présents initialement dans la charge. Le test utilisé simule avec des molécules modèles, sur micropilote, ce phénomène. On étudie ainsi l'inhibition de l'HDN de la 2,6-diéthylaniline par des quantités variables de quinoléine.
La réaction est réalisée en phase gazeuse, dans un microréacteur dynamique fonctionnant sous pression.
Le catalyseur est sulfuré in situ par le mélange solvant (nheptane)-diméthyldisulfure dès 200°C.
L'ensemble de l'installation, sous pression élevée d'hydrogène est isolée thermiquement. L'alimentation se fait à débit constant et sous une pression fixée par la pression totale de la réaction. Les charges en réactifs (solvant + DEA + quinoléine) et le mélange sulfurant alimentent 2 pompes doseuses GILSON permettant de travailler à débit variable. Les produits de la réaction sous forme gazeuse sont détendus à pression atmosphérique par le biais d'une vanne de régulation à commande pneumatique. Les analyses sont réalisées en ligne par un chromatographe à ionisation de flamme.
Les conditions opératoires sont les suivantes :

| | |
|---|---|
| $P_{totale} = 60\ 10^5$ Pa | $P_{heptane} = 6\ 10^4$ Pa |
| | $PH_2 = 57\ 10^5$ Pa |
| $P_{quinoléine} = P_{DEA} = 4\ 10^3$ Pa | |
| $P_{H2S} = 1.2\ 10^5$ Pa | |
| $m_{catalyseur} = 500$ mg | |
| $Q_{H2} = 100$ 1/h | |
| $Q_{DEA} = Q_{quinoléine} = 12$ cm$^3$/h | |

On peut alors mesurer le pouvoir inhibiteur de la quinoléine en comparant la conversion en diéthylamine (DEA) en fonction de la quantité de quinoléine rajoutée :

TABLEAU 3

|  | Catalyseur Quino/DEA | AA | HR 346 |
|---|---|---|---|
| Conversion en DEA (%) | 0 | 95 | 88 |
|  | 0.1 | 72 | 33 |
|  | 0.3 | 46 | 12 |

Le catalyseur selon l'invention est plus résistant à l'effet inhibiteur de la quinoléine que le catalyseur commercial.

## Revendications

1. Procédé de synthèse d'oxydes métalliques de surface spécifique supérieure à 135 m$^2$/g et de porosité supérieure à 0,2 cm$^3$/g consistant à introduire un sel d'au moins un métal dans un milieu sel fondu, à maintenir le mélange ainsi obtenu à la température de réaction le temps nécessaire pour transformer le sel en oxyde et à isoler l'oxyde métallique formé caractérisé en ce que le milieu sel fondu est constitué par au moins un sel alcalin à effet oxydant du groupe constitué par les nitrates et les sulfates alcalins.

2. Procédé selon la revendication 1 caractérisé en ce que le milieu sel fondu est constitué d'un mélange de deux nitrates alcalins.

3. Procédé selon la revendication 2 caractérisé en ce que le mélange est un mélange eutectique de nitrate de sodium et de nitrate de potassium.

4. Procédé selon l'une des revendications 1 à 3 caractérisé en ce que la température de la réaction varie entre 250 et 550°C.

5. Procédé selon l'une des revendications 1 à 4 caractérisé en ce que la durée de la réaction est comprise entre 30 minutes et 2 heures.

6. Procédé selon l'une des revendications 1 à 5 caractérisé en ce qu'on utilise le sel alcalin à effet oxydant en large excès stoechiométrique par rapport au sel métallique, par exemple en excès steochiométrique de 2 à 3.

7. Procédé selon l'une des revendications 1 à 6 caractérisé en ce qu'on isole l'oxyde métallique formé par filtration après élimination des sels alcalins oxydants par lavage à l'eau.

8. Procédé selon l'une des revendications 1 à 7 caractérisé en ce que le métal du sel à transformer en oxyde appartient aux groupes 3 et 4 de la classification périodique des éléments.

9. Procédé selon l'une des revendications 1 à 8 caractérisé en ce que le métal du sel métallique à transformer en oxyde appartient au groupe constitué par le zirconium, l'aluminium, le silicium et le titane.

10. Procédé selon l'une des revendications 1 à 9 caractérisé en ce que le sel métallique est choisi dans le groupe constitué par l'oxychlorure, le nitrate, le sulfate et les halogénures métalliques.

11. Oxydes métalliques obtenus seuls ou en mélange selon le procédé définis par l'une des revendications 1 à 10 de diamètre moyen de pore compris entre 6 et 7 nm.

12. Utilisation d'oxydes métalliques selon la revendication 11 comme support dans les catalyseurs d'hydrotraitement de charges hydrocarbonées.

# EP 0 478 768 B1

**Patentansprüche**

1. Verfahren zur Synthese von Metalloxiden mit einer spezifischen Oberfläche von über 135 m²/g und einer Porosität von über 0,2 cm³/g durch Zugabe eines Salzes wenigstens eines Metalls zu einem geschmolzenen Salz, Halten des auf diese Weise erhaltenen Gemisches bei der Reaktionstemperatur während einer für die Umwandlung des Salzes in das Oxid erforderlichen Zeitdauer und Isolierung des gebildeten Metalloxids, dadurch **gekennzeichnet**, daß das geschmolzene Salz wenigstens aus einem oxidierend wirkenden Alkalimetallsalz aus der Gruppe, bestehend aus Alkalimetallnitraten und -sulfaten, besteht.

2. Verfahren nach Anspruch 1, dadurch **gekennzeichnet**, daß das geschmolzene Salz aus einem Gemisch aus zwei Alkalimetallnitraten besteht.

3. Verfahren nach Anspruch 2, dadurch **gekennzeichnet**, daß das Gemisch ein eutektisches Gemisch aus Natrium- und Kaliumnitrat ist.

4. Verfahren nach einem der Ansprüche 1 bis 3, dadurch **gekennzeichnet,** daß die Reaktionstemperatur zwischen 250 und 550°C liegt.

5. Verfahren nach einem der Ansprüche 1 bis 4, dadurch **gekennzeichnet,** daß die Reaktionsdauer zwischen 30 Minuten und 2 Stunden liegt.

6. Verfahren nach einem der Ansprüche 1 bis 5, dadurch **gekennzeichnet,** daß man das oxidierend wirkende Alkalimetallsalz in starkem stöchiometrischem Überschuß, bezogen auf das Metallsalz, z.B. in einem stöchiometrischen Überschuß von 2 bis 3, verwendet.

7. Verfahren nach einem der Ansprüche 1 bis 6, dadurch **gekennzeichnet**, daß man das gebildete Metalloxid nach Abtrennung der oxidierend wirkenden Alkalimetallsalze durch Waschen mit Wasser durch Filtration isoliert.

8. Verfahren nach einem der Ansprüche 1 bis 7, dadurch **gekennzeichnet**, daß das Metall des in ein Oxid umzuwandelnden Salzes zu den Gruppen III und IV des Periodensystems der Elemente gehört.

9. Verfahren nach einem der Ansprüche 1 bis 8, dadurch **gekennzeichnet**, daß das Metall des in das Oxid umzuwandelnden Metallsalzes zu einer aus Zirkonium, Aluminium, Silizium und Titan bestehenden Gruppe gehört.

10. Verfahren nach einem der Ansprüche 1 bis 9, dadurch **gekennzeichnet**, daß das Metallsalz ausgewählt wird aus der Gruppe, bestehend aus Metalloxidchloriden, Metallnitraten, -sulfaten und -halogeniden.

11. Metalloxide, die einzeln oder im Gemisch nach dem in einem der Ansprüche 1 bis 10 definierten Verfahren erhalten wurden, mit einem durchschnittlichen Porendurchmesser zwischen 6 und 7 nm.

12. Verwendung von Metalloxiden nach Anspruch 11 als Träger für Katalysatoren für die Hydrierung von Kohlenwasserstoffchargen.

**Claims**

1. Method of synthesizing metal oxides with specific surface area greater than 135 m²/g and with porosity greater than 0.2 cm³/g, consisting of introducing a salt of at least one metal into a molten salt medium, of keeping the mixture thus produced at the reaction temperature for the time necessary to transform the salt into oxide and of isolating the metal oxide formed, characterized in that the molten salt medium is constituted by at least one alkali-metal salt with an oxidising effect of the group constituted by the alkali-metal nitrates and sulphates.

2. Method according to Claim 1, characterized in that the molten salt medium is constituted by a mixture of two alkali-metal nitrates.

3. Method according to Claim 2, characterized in that the mixture is a eutectic mixture of sodium nitrate and potassium nitrate.

4. Method according to any one of Claims 1 to 3, characterized in that the reaction temperature varies between 250 and 550°C.

5. Method according to any one of Claims 1 to 4, characterized in that the duration of the reaction is between 30 minutes and 2 hours.

6. Method according to any one of Claims 1 to 5, characterized in that the alkali-metal salt with an oxidising effect is used in a large stoichiometric excess relative to the metal salt, for example, in a stoichiometric excess of from 2 to 3.

7. Method according to any one of Claims 1 to 6, characterized in that the metal oxide formed is isolated by filtration after elimination of the oxidizing alkali-metal salts by washing with water.

8. Method according to any one of Claims 1 to 7, characterized in that the metal of the salt to be transformed into oxide belongs to groups 3 and 4 of the periodic table of elements.

9. Method according to any one of Claims 1 to 8, characterized in that the metal of the metal salt to be transformed into oxide belongs to the group constituted by zirconium, aluminium, silicon and titanium.

10. Method according to any one of Claims 1 to 9, characterized in that the metal salt is selected from the group constituted by metal oxychloride, nitrate, sulphate and halides.

11. Metal oxides obtained singly or mixed according to the method defined by any one of Claims 1 to 10 with an average pore diameter of between 6 and 7 nm.

12. Use of metal oxides according to Claim 11 as substrates in catalysts for the hydro-treatment of hydrocarbonic feed-stock.